# EUROPEAN PATENT APPLICATION

(11) **EP 4 266 440 A1**
(43) Date of publication of application: **25.10.2023**
(21) Application number: 22880087.6
(22) Date of filing: 16.09.2022
(51) Int. Cl.: H01M 10/04

(54) **BATTERY CELL, BATTERY, AND ELECTRICAL APPARATUS**

(30) Priority: 13.10.2021 CN 202122469410 U
(71) Applicant: Contemporary Amperex Technology Co., Limited, Ningde City, Fujian 352100 (CN)
(72) Inventor: WANG, Zhiming, Ningde City, Fujian 352100 (CN); HUANG, Caixia, Ningde City, Fujian 352100 (CN)
(74) Representative: Thoma, Michael
(86) International application number: PCT/CN2022/119263
(87) International publication number: WO 2023/061147

(57) **Abstract**

A battery cell, a battery, and an electrical apparatus, the battery cell (30) comprising a shell assembly (40), an electrode assembly (50), and an elastic member (60). The shell assembly (40) has an accommodating cavity (40a), with the electrode assembly (50) and the elastic member (60) being accommodated in the accommodating cavity (40a), and the elastic member (60) being attached to the electrode assembly (50). The elastic member (60) has a pore structure for accommodating an electrolyte solution, and the elastic member (60) is configured to deform when the electrode assembly (50) expands so as to release the electrolyte solution.

## Description

### CROSS-REFERENCE TO RELATED APPLICATIONS

The present application claims priority to Chinese patent application 202122469410.9, entitled "BATTERY CELL, BATTERY, AND ELECTRICAL APPARATUS", filed on October 13, 2021, which is incorporated herein by reference in its entirety.

### TECHNICAL FIELD

The present application relates to the technical field of batteries, and in particular to a battery cell, a battery, and an electrical apparatus.

### BACKGROUND

Battery cells are widely used in electrical apparatuses such as mobile phones, laptops, battery vehicles, electric vehicles, electric planes, electric ships, electric toy cars, electric toy ships, electric toy planes and electric tools, and the like. The battery cells may include nickelcadmium battery cells, nickel-hydrogen battery cells, lithium-ion battery cells, secondary alkaline zinc-manganese battery cells, and the like.

In the development of battery cell technologies, how to improve the performance of battery cells is the current research direction in the industry.

### SUMMARY OF THE INVENTION

The present application provides a battery cell, a battery, and an electrical apparatus that can effectively improve the working safety of the battery cell.

In a first aspect, the present application proposes a battery cell comprising: a shell assembly having an accommodating cavity; an electrode assembly accommodated in the accommodating cavity; and an elastic member accommodated in the accommodating cavity, the elastic member being attached to the electrode assembly, the elastic member having a pore structure for accommodating an electrolyte solution, and the elastic member being configured to deform when the electrode assembly expands so as to release the electrolyte solution.

In the battery cell provided in embodiments of the present application, an elastic member is provided in the accommodating cavity, which can effectively reduce the gap between the shell assembly and the electrode assembly, that is, improving the group margin of the battery cell. In the process of chemical formation of the battery cell, it is necessary to clamp the battery cell by a clamp. Due to the high group margin of the battery cell, the clamping force of the clamp upon the electrode assembly can reach a preset value, so as to ensure the magnitude and direction of the clamping force upon the electrode assembly during the chemical formation process, which causes the battery cell to expand in a preset direction, thereby effectively reducing the risk of wrinkling of electrode sheet units of the electrode assembly and improving the service life of the battery cell. At the same time, the clamping force of the clamp upon the electrode assembly is ensured, so that air bubbles in the electrolyte solution can be squeezed out during the clamping process of the clamp, thus reducing the possibility of interfacial black spots or lithium plating in the electrode assembly. In addition, the electrode assembly will expand in the process of cycling, and when the electrode assembly expands, the clamping force of the clamp upon the electrode assembly will also increase, and since the elastic member is abutted against the electrode assembly, the increase of the clamping force of the clamp will cause the elastic member to produce compressive deformation, so the increase amount of the clamping force of the clamp upon the electrode assembly will be reduced by the deformation of the elastic member, which is conductive to ensuring the performance stability of the electrode assembly in the process of charge-discharge cycles. Furthermore, the liquid storage chamber of the elastic member can store an electrolyte solution, which can be released during the process of compression of the elastic member for the cyclic consumption of the battery cell, so that the service life of the battery cell can be further improved.

In some embodiments, the porosity of the elastic member is 30% to 70%.

In some embodiments, the number of electrode assemblies is set to a plurality, the plurality of electrode assemblies being arranged in sequence; and the elastic member being provided between at least two adjacent ones of the electrode assemblies. The liquid storage capacity and the ability to recover from the deformation of the elastic member can be well balanced, so that the elastic member achieves a better effect after the combination of the liquid storage capacity and the ability to recover from the deformation.

In some embodiments, the elastic member is distributed with the same number of electrode assemblies on both sides. In this way, the compressing force of the electrode assembly upon both sides of the elastic member is substantially equal, and the force on the elastic member is more balanced, which is conductive to maintaining the stability of the structure of the elastic member.

In some embodiments, the elastic member is provided between any adjacent two of the electrode assemblies. This further improves the group margin of the battery cell and ensures the magnitude and direction of the clamping force of the clamp upon each electrode assembly during the chemical formation process of the battery cell, so that each electrode assembly expands along a predetermined direction.

In some embodiments, the electrode assembly includes two wide surfaces provided oppositely along a first direction and two narrow surfaces provided oppositely along a second direction, the narrow surfaces connecting two said wide surfaces, and at least part of the narrow surfaces being arc-shaped; and the elastic member is attached to the wide faces. In this way, during the chemical formation process of the battery cell, the clamping force of the clamp upon the electrode assembly along the direction perpendicular to the wide surface can be better controlled, and the expansion direction and expansion amount of the electrode assembly can be better controlled, thus reducing the possibility of excessive expansion of the electrode assembly along the direction perpendicular to the wide surface.

In some embodiments, the shell assembly includes a case and a cover assembly, the case having an opening, the elastic member being provided between the case and the electrode assembly, and the cover assembly covering the opening to seal the case and form the accommodating cavity. Such arrangement facilitates the transfer of the clamping force of the clamp upon the case to the electrode assembly during the chemical formation process of the battery cell.

In some embodiments, the elastic member is bonded to the electrode assembly, which is conductive to improving the reliability of the connection between the elastic member and the electrode assembly.

In a second aspect, the present application provides a battery including a battery cell of any one of the embodiments of the first aspect.

In a third aspect, embodiments of the present application provide an electrical apparatus including a battery of the second aspect, the battery being used to provide electrical energy.

In the battery cell provided in embodiments of the present application, an elastic member is provided in the accommodating cavity, which can effectively reduce the gap between the shell assembly and the electrode assembly, that is, improving the group margin of the battery cell. In the process of chemical formation of the battery cell, it is necessary to clamp the battery cell by a clamp. Due to the high group margin of the battery cell, the clamping force of the clamp upon the electrode assembly can reach a preset value, so as to ensure the magnitude and direction of the clamping force upon the electrode assembly during the chemical formation process, which causes the battery cell to expand in a preset direction, thereby effectively reducing the risk of wrinkling of electrode sheet units of the electrode assembly and improving the service life of the battery cell. At the same time, the clamping force of the clamp upon the electrode assembly is ensured, so that air bubbles in the electrolyte solution can be squeezed out during the clamping process of the clamp, thus reducing the possibility of interfacial black spots or lithium plating in the electrode assembly. In addition, the electrode assembly will expand in the process of cycling, and when the electrode assembly expands, the clamping force of the clamp upon the electrode assembly will also increase, and since the elastic member is abutted against the electrode assembly, the increase of the clamping force of the clamp will cause the elastic member to produce compressive deformation, so the increase amount of the clamping force of the clamp upon the electrode assembly will be reduced by the deformation of the elastic member, which is conductive to ensuring the performance stability of the electrode assembly in the process of charge-discharge cycles. Furthermore, the liquid storage chamber of the elastic member can store an electrolyte solution, which can be released during the process of compression of the elastic member for the cyclic consumption of the battery cell, so that the service life of the battery cell can be further improved.

### BRIEF DESCRIPTION OF DRAWINGS

In order to illustrate the technical solutions of the embodiments of the present application more clearly, the following briefly introduces the drawings required in the embodiments of the present application. Obviously, the drawings described below are only some embodiments of the present application. For those of ordinary skill in the art, other drawings can also be obtained according to the drawings without any creative effort.
FIG. 1 is a schematic structural diagram of an electrical apparatus provided in an embodiment of the present application;
FIG. 2 is a schematic structural diagram of a battery provided in an embodiment of the present application;
FIG. 3 is a schematic structural diagram of a battery module as shown in FIG. 2;
FIG. 4 is a schematic structural diagram of a battery cell provided in an embodiment of the present application;
FIG. 5 is a cross-sectional schematic diagram of a battery cell provided in an embodiment of the present application;
FIG. 6 is a cross-sectional schematic diagram of a battery cell provided in another embodiment of the present application; and
FIG. 7 is a schematic structural diagram of an elastic member of the battery cell provided in an embodiment of the present application.

In the accompanying drawings, the accompanying drawings are not necessarily drawn to actual scale.

### Description of reference numerals:

1. Vehicle; 1a. Motor; 1b. Controller;
10. Battery; 11. Bottom shell; 12. Top shell;
20. Battery module;
30. Battery cell;
40. Shell assembly; 40a. Accommodating cavity; 41. Cover assembly; 411. End cover; 412. Electrode terminal; 42. Case; 421. Opening;
50. Electrode assembly; 51. Electrode sheet unit; 52. Tab; 50a. Wide surface; 50b. Narrow surface;
60. Elastic member; 60a. Pore structure;
X. First direction; and Y. Second direction.

### DETAILED DESCRIPTION

Embodiments of the present application will be described in further detail hereinafter in conjunction with the accompanying drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are only used for descriptive purposes, and cannot be construed as indicating or implying relative importance. "Vertical" does not mean being vertical in the strict sense, but within the allowable range of error. "Parallel" does not mean being parallel in the strict sense, but within the allowable range of error.

Orientation words appearing in the following description are all directions shown in the drawings, and do not limit the specific structure of the present application. In the description of the present application, it should also be noted that, unless otherwise expressly specified and defined, the terms "install", "connected" and "connect" should be understood in a broad sense, for example, they may be fixedly connected, detachably connected or integrally connected; and they may be directly connected or indirectly connected through an intermediate medium. For those of ordinary skill in the art, the specific meanings of the above terms in the present application may be understood according to specific circumstances.

In the present application, the battery cell may comprise a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, rectangular, or in other shapes, which is also not limited in the embodiments of the present application. The battery cells are generally divided into three types according to encapsulating manners: cylindrical battery cells, prismatic rectangular battery cells, and pouch cells, which are not limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box body for encapsulating one or more battery cells. The box body can prevent liquids or other foreign matters from affecting the charging or discharging of the battery cells.

The battery cell includes an electrode assembly and an electrolyte solution, the electrode assembly being composed of a positive electrode sheet, a negative electrode sheet, and a separator. The battery cell works mainly relying on the movement of metal ions between the positive electrode sheet and the negative electrode sheet. The positive electrode sheet includes a positive electrode current collector and a positive electrode active material layer, wherein the positive electrode active material layer is coated on a surface of the positive electrode current collector. Current collectors not coated with the positive electrode active material layer protrude from current collectors already coated with the positive electrode active material layer, and the current collectors not coated with the positive electrode active material layer are laminated and then serve as a positive tab. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode sheet includes a negative electrode current collector and a negative electrode active material layer, wherein the negative electrode active material layer is coated on a surface of the negative electrode current collector. Current collectors not coated with the negative electrode active material layer protrude from current collectors coated with the negative electrode active material layer, and the current collectors not coated with the negative electrode active material layer are laminated and then as a negative tab. The material of the negative electrode current collector may be copper, and the negative electrode active material may be carbon, silicon, or the like. The material of the separator may be PP or PE, and the like. In addition, the electrode assembly may be of a wound structure or a laminated structure, which is not limited in the embodiments of the present application.

After discovering the problem of low service life of battery cells, the inventors analyzed and studied the structure and the usage environment of battery cells. After disassembling and analyzing the various working processes of battery cells, the inventors found that during the structural design of a battery cell, in order to ensure that the battery cell can enter the accommodating cavity for the battery cell by means of clamping during the assembly process and in order to reserve space for the expansion of electrode sheet units of the electrode assembly that occurs during the charging process, the group margin of the battery cell cannot be too high. It should be noted that the group margin characterizes the gap ratio inside the battery cell, and the higher the group margin, the smaller the gap in the accommodating cavity for the battery cell. During the chemical formation process of the battery cell, when the battery cell is charged for the first time, the electrode sheet units of its internal electrode assembly expand for the first time. At this time, it is necessary to clamp the battery cell by a clamp to form a certain clamping force on the electrode sheet units of the electrode assembly, so that the electrode sheet units expand in a predetermined direction during the chemical formation process. However, precisely because of the low group margin of the battery cell, the clamping force of the clamp upon the electrode sheet units when clamping the battery cell from the outside of the shell assembly cannot reach a predetermined value, so that the electrode sheet units cannot expand in a predetermined direction, thus tending to cause the phenomenon of wrinkling of the electrode sheets, which can seriously affect the service life of the electrode sheet units and thus the service life of the entire battery cell. Moreover, as the battery cell is cyclically charged and discharged, the electrolyte solution is continuously consumed, resulting in a shortage of the electrolyte solution in the battery cell, and since it is impossible to replenish the electrolyte solution in the battery cell, the service life of the battery cell is also severely affected.

Based on the above problems found by the applicant, the inventors have improved the structure of the battery cell. The technical solutions described in the embodiments of the present application are applicable to a battery cell, a battery including the battery cell, and an electrical apparatus using the battery.

The electrical apparatus may be, but not limited to, a vehicle, a mobile phone, a portable device, a laptop computer, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range electric vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The embodiments of the present application do not impose special limitations on the above electrical equipment.

For the convenience of illustration, the following embodiments are illustrated using an example in which the electrical apparatus is a vehicle.

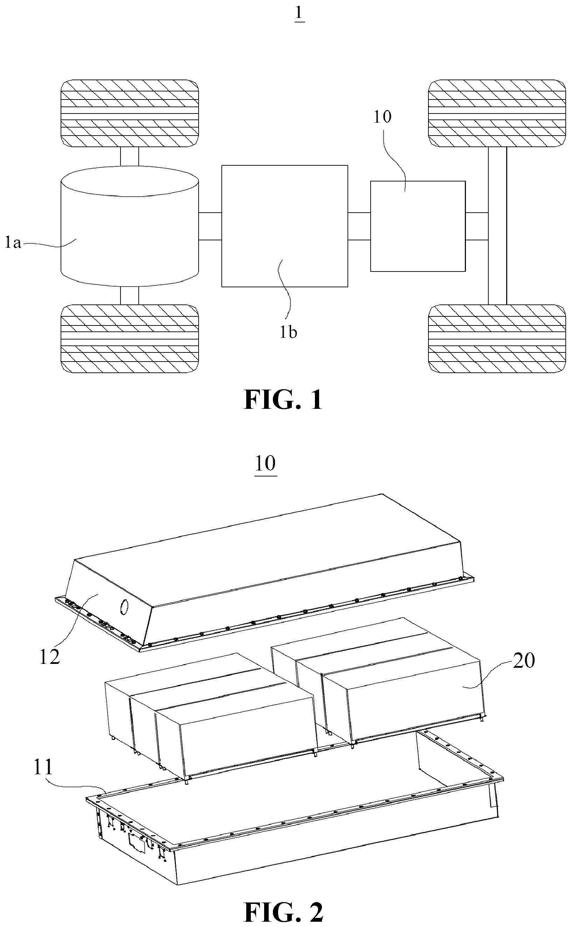

As shown in FIG. 1, a vehicle 11 is provided with a battery 10 inside. The battery 10 may be provided at the bottom or head or tail of the vehicle 1. The battery 10 may be used to power the vehicle 1. For example, the battery 10 may be used as an operating power source of the vehicle 1.

The vehicle 1 may also include a controller 1b and a motor 1a. The controller 1b is used to control the battery 10 to supply power to the motor la, for example, for the operating power demand when the vehicle 1 is starting, navigating and driving.

In some embodiments of the present application, the battery 10 not only can serve as an operating power source of the vehicle 1, but also can serve as a driving power source of the vehicle 1, thus replacing or partially replacing fuel or natural gas to provide driving power for the vehicle 11.

Referring to FIG. 2, the battery 10 includes a battery cell 30 (not shown in FIG. 2). The battery 10 may also include a box body for accommodating the battery cell 30.

The box body is used to accommodate the battery cell 30, and the box body may be of a variety of structural forms.

In some embodiments, the box body may include a bottom shell 11 and a top shell 12. The bottom shell 11 and the top shell 12 cover each other. The bottom shell 11 and the top shell 12 together define an accommodating space for accommodating the battery cell 30. The bottom shell 11 and the top shell 12 may both be of hollow structures with an opening 421 on one side. The opening 421 side of the bottom shell 11 cover the opening 421 side of the top shell 12 to form a box body with an accommodating space. A sealing member may also be provided between the bottom shell 11 and the top shell 12 to achieve a sealed connection between the bottom shell 1111 and the top shell 12.

In practical use, the bottom shell 11 may cover the top of the top shell 12. The bottom shell 11 may also be called an upper box body and the top shell 12 may also be called a lower box body.

The bottom shell 11 and the top shell 12 may be of a variety of shapes, e.g., cylindrical, rectangular, or the like. In FIG. 2, as an example, the bottom shell 11 and the top shell 12 are both rectangular in structure.

In the battery 10, the number of battery cells 30 may be one or a plurality. If the number of battery cells 30 is a plurality, the plurality of battery cells 30 may be connected to each other in series or in parallel or in a parallel-series connection. The parallel-series connection means that the plurality of battery cell 30 are connected both in series and in parallel. The plurality of battery cells 30 may be directly connected together in series or in parallel or in a parallel-series connection, and then an entirety composed of the plurality of battery cells 30 may be accommodated in the box body, or the plurality of battery cells 30 may first be connected in series or in parallel or in a parallel-series connection to form a battery module 20. A plurality of battery modules 20 are then connected in series or in parallel or in a parallel-series connection to form an entirety and accommodated within the box body.

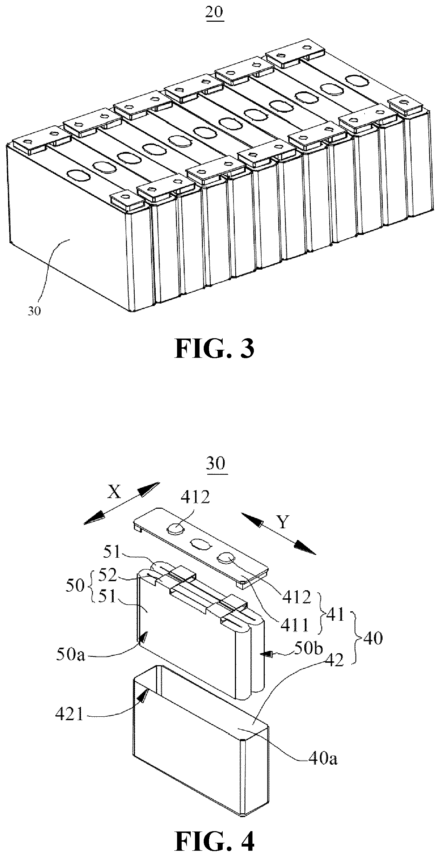

In some embodiments, as shown in FIG. 3, in the battery 10, the number of battery cells 30 is a plurality. The plurality of battery cells 30 are first connected in series or in parallel or in a parallel-series connection to form the battery module 20. A plurality of battery modules 20 are then connected in series or in parallel or in a parallel-series connection to form an entirety and accommodated within the box body.

In some embodiments, the plurality of battery cells 30 in the battery module 20 may be electrically connected to each other via a convergence component to enable parallel or series or hybrid connection of the plurality of battery cells 30 in the battery module 20.

As shown in FIG. 4, the battery cells 30 include a case 42, an electrode assembly 50, a cap assembly 41, and an adapter component. The case 42 has an opening 421. The electrode assembly 50 is accommodated within the case 42. The electrode assembly 50 includes an electrode sheet unit 51 and a tab 52. The cover assembly 41 includes an end cover 411, an electrode terminal 412, and an insulating member. The end cover 411 is used to cover the opening 421. The electrode terminal 412 is mounted on the end cover 411. The insulating member is located on the side of the end cover 411 facing the electrode assembly 50. The adapter component is used to connect the electrode terminal 412 and the tab 52 to electrically connect the tab 52 to the electrode terminal 412. Here, the shell assembly 40 includes the cover assembly 41 and the case 42.

The case 42 may be in various shapes, such as a cylinder, a cuboid, or the like. The shape of the case 42 may be determined according to the specific shape of the electrode assembly 50. For example, if the electrode assembly 50 has a cylinder structure, the case 42 may be selected to be of a cylinder structure. If the electrode assembly 50 has a cuboid structure, the case 42 may be selected to be of a cuboid structure. In FIG. 4, by way of example, the case 42 and the electrode assembly 50 are both of a cuboid structure.

The case 42 may be made of various materials, such as copper, iron, aluminum, stainless steel, and aluminum alloy, which is not particularly limited in the embodiments of the present application.

The number of electrode assemblies 50 accommodated in the case 42 may be one or a plurality. In FIG. 4, the number of electrode assemblies 50 accommodated in the case 42 is two.

In some embodiments, the electrode sheet unit 51 includes a positive electrode sheet, a negative electrode sheet, and a separator. The electrode assembly 50 may be of a wound structure formed by winding the positive electrode sheet, the separator, and the negative electrode sheet. The electrode assembly 50 may also be of a laminated structure formed through laminated arrangement of the positive electrode sheet, the separator and the negative electrode sheet.

The positive electrode sheet may include a positive electrode current collector and a positive electrode active material layer. A surface of the positive electrode current collector is coated with the positive electrode active material layer. The negative electrode sheet may include a negative electrode current collector and a negative electrode active material layer. A surface of the negative electrode current collector is coated with the negative electrode active material layer. The separator is between the positive electrode sheet and the negative electrode sheet, and is configured to separate the positive electrode sheet from the negative electrode sheet, so as to reduce a risk of short circuit between the positive electrode sheet and the negative electrode sheet.

Here, the material of the separator may be PP (polypropylene), PE (polyethylene), or the like.

The tabs 52 in the electrode assembly 50 are divided into positive tabs and negative tabs. The positive tab may be part of the positive electrode current collector that is not coated with the positive electrode active material layer. The negative tab may be part of the negative electrode current collector that is not coated with the negative electrode active material layer.

In embodiments of the present application, as shown in FIG. 4, the end cover 411 of the cover assembly 41 is used to cover the opening 421 of the case 42 to form a closed space for accommodating the battery cell 30, and the closed space may also be used to accommodate an electrolyte, such as an electrolyte solution. The electrode terminal 412 of the cover assembly 41 is an output component for outputting electrical energy from the battery cell 30, and the number of electrode terminals 412 in the cover assembly 41 may be one or two.

The number of openings 421 of the case 42 may be one or two. If the number of openings 421 of the case 42 is one, the number of cover assemblies 41 may be one. If the number of openings 421 of the case 42 is two, the number of cover assemblies 41 may be two. The end covers 411 in the two cover assemblies 41 cover the two openings 421, respectively.

In some embodiments, as shown in FIG. 4, the number of openings 421 of the case 42 is one and the number of cover assemblies 41 is also one. Two electrode terminals 412 may be provided in the cover assembly 41. One electrode terminal 412 in the cover assembly 41 is electrically connected to one tab 52 (positive tab) of the electrode assembly 50 by an adapter component. The other electrode terminal 412 in the cover assembly 41 is electrically connected to the other tab 52 (negative tab) of the electrode assembly 50 by another adapter component.

In some other embodiments, the number of openings 421 of the case 42 is two. The two openings 421 are provided on two opposite sides of the case 42. The number of cover assemblies 41 is two. The two cover assemblies 41 cover the two openings 421 of the case 42, respectively. In this case, the number of electrode terminals 412 in the cover assembly 41 may be one. The electrode terminal 412 in one cover assembly 41 is electrically connected to one tab 52 (positive tab) of the electrode assembly 50 by an adapter component; and the electrode terminal 412 of the other cover assembly 41 is electrically connected to the other tab 52 (negative tab) of the electrode assembly 50 by another adapter component.

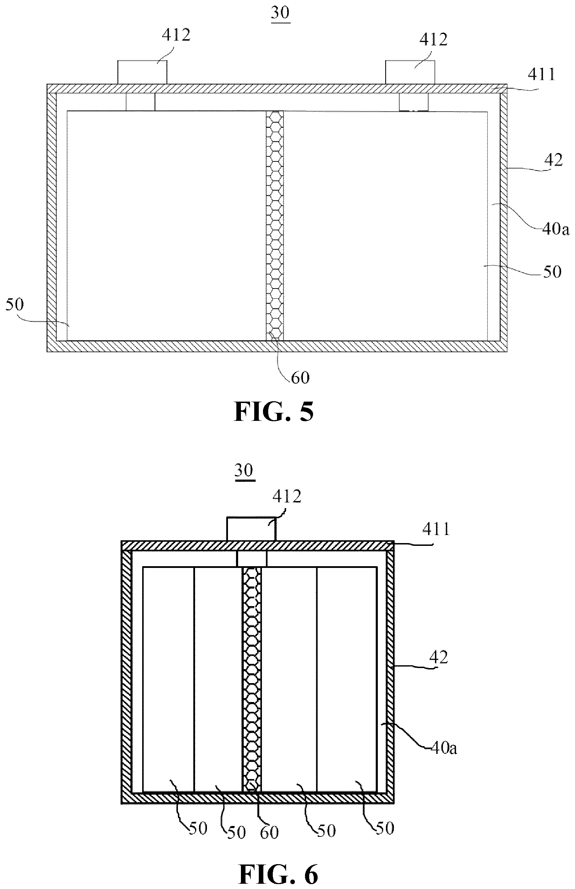

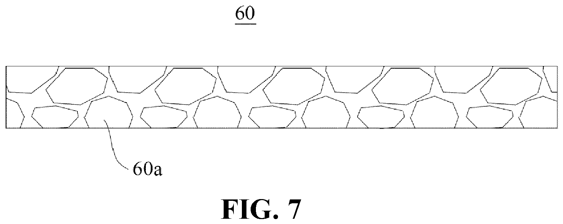

As shown in FIGS. 5 to 7, in the battery cell 30 provided according to embodiments of the present application, the battery cell 30 includes the shell assembly 40, the electrode assembly 50, and the elastic member 60. The shell assembly 40 has an accommodating cavity 40a, wherein the electrode assembly 50 is accommodated in the accommodating cavity 40a, the elastic member 60 is accommodated in the accommodating cavity 40a, the elastic member 60 is attached to the electrode assembly 50, the elastic member 60 has a gap structure 60a for accommodating an electrolyte solution, and the elastic member 60 is configured to deform when the electrode assembly 50 expands to so as release the electrolyte solution.

Specifically, the accommodating cavity 40a is a closed space that is formed inside the shell assembly 40 and used for accommodating the electrolyte solution without causing leakage of the electrolyte solution.

The elastic member 60 is attached to the electrode assembly 50, either by means of contact connection, or by means of bonding or by means of connection by a connecting element. The elastic member 60 is provided to be attached to the electrode assembly 50, that is, the elastic member 60 and the electrode assembly 50 may be provided to transfer forces to each other. The compressing force can be applied to the elastic member 60 by the electrode assembly 50 or to the electrode assembly 50 by the elastic member 60, while when the elastic member 60 recovers from deformation after being compressed, the compressing force is applied to the electrode assembly 50.

When the expansion of the electrode assembly 50 occurs, a certain compressing force is formed on the elastic member 60, and the elastic member 60 is compressively deformed under the action of the compressing force, while during the recovery of the electrode assembly 50 from the deformation, the compressing force on the elastic member 60 gradually decreases, so that the elastic member 60 can recover at least partially from the deformation.

The elastic member 60 may be attached to the electrode assembly 50 alone or to both the electrode assembly 50 and the shell assembly 40. The number of elastic members 60 in a battery cell 30 may be one or a plurality, and the sizes and shapes of the plurality of elastic members 60 may be the same or different, which is specifically configured according to the arrangement positions of the elastic members 60 and the structure of the surrounding electrode assembly 50 and shell assembly 40.

No limitation is imposed on the specific material of the elastic member 60, which needs to have a certain ability to produce deformation and be able to recover at least partially from the deformation. In addition, the material of the elastic member 60 is less likely to react chemically with the electrolyte solution during the work of the elastic member 60.

The elastic member 60 may be in the form of a sheet, a block, or other irregular shapes, as long as it is capable of producing deformation and recovering at least partially from the deformation. Alternatively, the elastic member 60 may be attached to a portion of the surface of the electrode assembly 50 or may enclose the entire outer surface of the electrode assembly 50.

The pore structure 60a is formed inside the elastomer 60 and is in communication with the accommodating cavity 40a, and the pore structure 60a may be of a structure similar to a sponge body. In the natural state of the elastomer 60, the pore structure 60a is capable of storing an electrolyte solution, and when the electrode assembly 50 expands, the elastomer 60 is compressively deformed and the pore structure 60a is compressed to release the electrolyte solution. It can be understood that a part of the structure of the elastic member 60 can be formed with the pore structure 60a, or all of the structure of the elastic member 60 can be formed with the pore structure 60a.

In the battery cell 30 provided in embodiments of the present application, an elastic member 60 is provided in the accommodating cavity 40a, which can effectively reduce the gap between the shell assembly 40 and the electrode assembly 50, that is, improving the group margin of the battery cell 30. In the process of chemical formation of the battery cell 30, it is necessary to clamp the battery cell 30 by a clamp. Due to the high group margin of the battery cell 60, the clamping force of the clamp upon the electrode assembly 50 can reach the preset value, so as to ensure the magnitude and direction of the clamping force upon the electrode assembly 50 during the chemical formation process, which causes the battery cell 30 to expand in a preset direction, thereby effectively reducing the risk of wrinkling of electrode sheet units 51 of the electrode assembly 50 and improving the service life of the battery cell 30. At the same time, the clamping force of the clamp upon the electrode assembly 50 is ensured, so that air bubbles in the electrolyte solution can be squeezed out during the clamping process of the clamp, thus reducing the possibility of interfacial black spots or lithium plating in the electrode assembly 50. In addition, the electrode assembly 50 will expand in the process of cycling, and when the electrode assembly 50 expands, the clamping force of the clamp upon the electrode assembly 50 will also increase, and since the elastic member 60 is abutted against the electrode assembly 50, the increase of the clamping force of the clamp will cause the elastic member 60 to produce compressive deformation, so the increase amount of the clamping force of the clamp upon the electrode assembly 50 will be reduced by the deformation of the elastic member 60, which is conductive to ensuring the performance stability of the electrode assembly 50 in the process of charge-discharge cycle. Furthermore, the liquid storage chamber 60a of the elastic member 60 can store an electrolyte solution, which can be released during the process of compression of the elastic member 60 for the cyclic consumption of battery cells 30, so that the service life of the battery cells 30 can be further improved.

No limitation is imposed on the size of the pore structure 60a within the elastic member 60, which may be of millimeter scale or micron scale. In addition, the distribution of the pore structure 60a within the elastic member 60 may be a certain regular distribution or may be a random distribution. Moreover, the proportion of the pore structure 60a in the elastic member 60 is not limited.

In some embodiments, the porosity of the elastic member 60 is 30% to 70%. Specifically, the porosity of the elastic member 60 may be 30%, 40%, 50%, 60%, or 70%, and the like.

The porosity characterizes the percentage of the volume of the pore structure 60a in the elastic member 60 to the total volume of the elastic member 60 in its natural state, which reflects the degree of compactness of the elastic member 60. The greater the porosity, the greater the amount of the electrolyte solution that can be stored in the elastic member 60, and the smaller the porosity, the denser the elastic member 60 is and the better its ability to recover from deformation after being compressed.

Therefore, by setting the gap ratio of the elastic member 60 to 30% to 70%, the liquid storage capacity of the elastic member 60 and the ability of the elastic member 60 to recover from the deformation can be well balanced, so that the elastic member 60 achieves a better effect after the combination of the liquid storage capacity and the ability to recover from the deformation.

In some embodiments, the material of the elastic member 60 includes at least one of polypropylene and rubber.

Specifically, the material of the elastic member 60 may include only polypropylene, or only rubber, or both polypropylene and rubber.

It can be understood that both polypropylene and rubber are less likely to chemically react with the electrolyte solution and have better elasticity, and both can be manufactured to form a stable sponge structural body.

In some embodiments, the number of electrode assemblies 50 is set to a plurality, the plurality of electrode assemblies 50 being arranged in sequence; and the elastic member 60 being provided between at least two adjacent ones of the electrode assemblies 50.

Specifically, the plurality of electrode assemblies 50 may be provided sequentially along the thickness direction of the battery cell 30, or sequentially along the length direction of the battery cell 30, or sequentially along the thickness direction and the length direction of the battery cell 30 at the same time. FIG. 5 illustrates an implementation in which two electrode assemblies 50 are provided sequentially along the length direction of the battery cell 30, and FIG. 6 illustrates an implementation in which four electrode assemblies 50 are provided sequentially along the thickness direction of the battery cell 30. The edge of the elastic member 60 may be flush with the edge of the electrode assembly 50, and may also extend beyond the edge of the electrode assembly 50, or be located inside the edge of the electrode assembly 50. The elastic member 60 may be in the form of a sheet and be sandwiched between two adjacent electrode assemblies 50, and the elastic member 60 may be provided between every two adjacent electrode assemblies 50, or the elastic member 60 may be provided between two adjacent ones of the electrode assemblies 50.

By setting the battery cell 30 to include a plurality of electrode assemblies 50, the electrical capacity of the battery cell 10 can be effectively increased. In addition, by arranging the elastic member 60 between at least two electrode assemblies 50, during the chemical formation process of the battery cell 30, it is possible to enable the clamp to maintain a certain clamping force on the electrode assemblies 50 on both sides of the elastic member 60, so that the electrode assemblies 50 on both sides of the elastic member 60 can be expanded and deformed in a preset direction. Moreover, when the electrode assemblies 50 on both sides of the elastic member 60 expands, they will both cause a certain compression on the elastic member 60 and squeeze out the electrolyte solution in the pore structure 60a of the elastic member 60 for consumption by the electrode assemblies 50 on both sides of the elastic member 60 in the charge-discharge cycle.

In some embodiments, the number of elastic members 60 is a plurality, and the plurality of elastic members 60 are separately abutted against the electrode assemblies 50.

Specifically, the plurality of elastic members 60 may or may not be of the same shape and may be attached between the electrode assemblies 50 or between the electrode assemblies 50 and the shell assembly 40.

It can be understood that the number of elastic members 60 is set to a plurality, and the elastic members 60 can be arranged at corresponding positions in the accommodating cavity 40a according to actual needs, so as to ensure the clamping force of the clamp upon the electrode assembly 50 at various positions during the chemical formation process of the battery cell 30, which improves the group margin of the battery cell 30 while further reducing the possibility of wrinkling of the electrode sheet unit 51 of the electrode assembly 50, thus improving the service life of the battery cell 30.

The number of electrode assemblies 50 within one battery cell 30 may be one or a plurality. In an embodiment where the number of electrode assemblies 50 is one, the elastic member 60 may be abutted between the electrode assembly 50 and the case 42. On the other hand, in an embodiment where the number of electrode assemblies 50 is a plurality, the elastic member 60 may be abutted between the electrode assembly 50 and the case 42, or between two adjacent electrode assemblies 50.

In an embodiment where the battery cell 30 includes a plurality of electrode assemblies 50, the number of electrode assemblies 50 may be an odd number or an even number.

In some embodiments, the difference in the numbers of electrode assemblies 50 distributed on both sides of the elastic member 60 is one, that is, the number of electrode assemblies 50 is an odd number, and the elastic member 60 is located in the middle of the plurality of electrode assemblies 50 as much as possible. With such an arrangement, in the process of cyclic charging and discharging of the battery cell 30, the expansion of the electrode assemblies 50 on both sides of the elastic member 60 separately form a compressing force on the elastic member 60, and since the difference in the numbers of the electrode assemblies 50 on both sides of the elastic member 60 is small, the compressing forces on both sides of the elastic member 60 are close to each other, resulting in a more balanced force, which is conducive to maintaining the stability of the structure of the elastic member 60.

In some other embodiments, as shown in FIGS. 5 and 6, the numbers of electrode assemblies 50 distributed on both sides of the elastic member 60 are the same, that is, the number of electrode assemblies 50 is set to an even number, and the elastic member 60 is located in the middle of the plurality of electrode assemblies 50, so that during the process of cyclic charging and discharging of the battery cell 30, the expansion amounts of the electrode assemblies 50 on both sides of the elastic member 60 are substantially the same, and thus the compressing forces on both side faces of the elastic member 60 are substantially equivalent, so the force on the elastic member 60 is relatively balanced, which is conducive to maintaining the stability of the structure of the elastic member 60.

In some embodiments, the elastic members 60 is provided between any adjacent two of the electrode assemblies 50.

With such an arrangement, it is possible to further improve the group margin of the battery cell 30 and ensure the magnitude and direction of the clamping force of the clamp upon each electrode assembly 50 during the chemical formation process of the battery cell 30, so that each electrode assembly 50 expands along a predetermined direction.

The elastic member 60 may be attached to any face of the electrode assembly 50, which is not limited here.

In some embodiments, the electrode assembly 50 includes two wide surfaces 50a provided oppositely along a first direction X and two narrow surfaces 50b provided oppositely along a second direction Y, the narrow surfaces 50b connecting two said wide surfaces 50a, and at least part of the narrow surfaces 50b being arc-shaped; and the elastic member 60 is attached to the wide faces 50a.

Specifically, the wide surface 50a is a flat plane, the narrow surface 50b has a certain arc shape, and the electrode assembly 50 expands along the thickness direction of the electrode sheet unit 51, so that the expansion force along the direction perpendicular to the wide surface 50a is the largest.

Therefore, by arranging the elastic member 60 to be attached to the wide surface 50a, during the chemical formation process of the battery cell 30, the clamping force of the clamp upon the electrode assembly 50 along the direction perpendicular to the wide surface 50a can be better controlled, and the expansion direction and expansion amount of the electrode assembly 50 can be better controlled, thus reducing the possibility of excessive expansion of the electrode assembly 50 along the direction perpendicular to the wide surface 50a.

In some embodiments, the shell assembly 40 includes a case 42 and a cover assembly 41, the case 42 having an opening 421, the elastic member 60 being abutted between the case 42 and the electrode assembly 50, and the cover assembly 41 covering the opening 421 to seal the case 42 and form the accommodating cavity 40a.

Specifically, the case 42 may have an opening 421 at one end and the number of cover assemblies 41 may be one, and the case 42 may also have openings 421 at both ends, with the two cover assemblies 41 covering the two opposing openings 421 to form the closed accommodating cavity 40a inside the battery cell 30. Such arrangement facilitates the transfer of the clamping force of the clamp upon the case 42 to the electrode assembly 50 during the chemical formation process of the battery cell 30.

In some embodiments, the elastic member 60 is bonded to the electrode assembly 50, It can be understood that by arranging the elastic member 60 to be bonded to the electrode assembly 50, the stability of the connection between the elastic member 60 and the electrode assembly 50 can be improved, and the stability of the position and posture of the elastic member 60 in the accommodating cavity 40a can be maintained, thus ensuring the stability of the performance of the elastic member 60.

In some embodiments, the elastic member 60 may be arranged to be located in a portion of the space between the case 42 and the electrode assembly 50. In some other embodiments, the elastic member 60 may also be arranged to be located in the entire space between the case 42 and the electrode assembly 50, that is, the elastic member 60 encloses the outside of the electrode assembly 50 to separate the electrode assembly 50 from the case 42, so that, during the chemical formation process of the battery cell 30, the clamping force of the clamp upon the battery cell 30 all needs to be transferred to the electrode assembly 50 through the elastic member 60, and during the expansion of the electrode assembly 50, the clamping force of the clamp upon the electrode assembly 50 rises by a small amount, thus facilitating the stability of the clamping force of the electrode assembly 50.

In some embodiments, the electrode assembly 50 includes the electrode sheet unit 51 and the tab 52 that protrudes from the electrode sheet unit 51, and the elastic member 60 is attached to the electrode sheet unit 51.

Specifically, the tab 52 is used to electrically connect the electrode sheet unit 51 to the electrode terminal 412 of the cover assembly 41 to facilitate normal charging and discharging of the battery cell 30. During the charging and discharging process of the battery cell 30, the expansion mainly occurs in the electrode sheet unit 51, so the above technical effect can be achieved by setting the elastic member 60 to be attached to the electrode sheet unit 51.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell (30), comprising:
a shell assembly (40) having an accommodating cavity (40a);
an electrode assembly (50) accommodated in the accommodating cavity (40a); and
an elastic member (60) accommodated in the accommodating cavity (40a), wherein the elastic member (60) is attached to the electrode assembly (50), the elastic member (60) has a pore structure (60a) for accommodating an electrolyte solution, and the elastic member (60) is configured to deform when the electrode assembly (50) expands so as to release the electrolyte solution.

2. The battery cell according to claim 1, wherein the elastic member (60) has a porosity of 30% to 70%.

3. The battery cell according to claim 1 or 2, wherein the number of the electrode assemblies (50) is set to a plurality, the plurality of electrode assemblies (50) being arranged in sequence; and
the elastic member (60) being provided between at least two adjacent ones of the electrode assemblies (50).

4. The battery cell according to any of claims 1 to 3, wherein the elastic member (60) is distributed with the same number of the electrode assemblies (50) on both sides.

5. The battery cell according to claim 3, wherein the elastic member (60) is provided between any adjacent two of the electrode assemblies (50).

6. The battery cell according to any of claims 1 to 5, wherein the electrode assembly (50) comprises two of wide surfaces (50a) provided oppositely along a first direction (X) and two of narrow surfaces (50b) provided oppositely along a second direction (Y), the narrow surfaces (50b) connecting two of the wide surfaces (50a), and at least part of the narrow surfaces (50b) being arc-shaped; and
the elastic member (60) is attached to the wide faces (50a).

7. The battery cell according to any of claims 1 to 6, wherein the shell assembly (40) comprises a case (42) and a cover assembly (41), the case (42) having an opening (421), the elastic member (60) being provided between the case (42) and the electrode assembly (50), and the cover assembly (41) covering the opening (421) to seal the case (42) and form the accommodating cavity (40a).

8. The battery cell according to any of claims 1 to 7, wherein the elastic member (60) is bonded to the electrode assembly (50).

9. A battery (10) comprising a plurality of battery cells (30) of any of claims 1 to 8.

10. An electrical apparatus comprising a battery (10) of claim 9, the battery (10) being used to provide electrical energy.
